# EUROPÄISCHE PATENTANMELDUNG

(11) **EP 3 542 751 A1**
(43) Veröffentlichungstag der Anmeldung: **25.09.2019**
(21) Anmeldenummer: 19164638.9
(22) Anmeldetag: 22.03.2019
(51) Int. Cl.: A61C 8/00

(54) **DENTALIMPLANTATSYSTEM**

(30) Priorität: 22.03.2018 CH 3912018
(71) Anmelder: Z-Systems AG, 4702 Oensingen (CH)
(72) Erfinder: Thomke, Ernst, 2540 Grenchen (CH)
(74) Vertreter: Frei Patent Attorneys

(57) **Zusammenfassung**

Ein Dentalimplantatsystem weist auf:
- Ein Verankerungsteil (1) aus einem keramischen Werkstoff zur Verankerung in Knochengewebe,
- ein Abutment (2) aus einem keramischen Werkstoff,
- Wobei das Verankerungsteil eine zu einem koronalen Ende hin offene Aussparung für einen Eingriff eines Befestigungspfostens (21) des Abutments (2) aufweist,
- Und eine Abutmentschraube (3),
- wobei das Abutment eine in axialer Richtung durchgehende Öffnung aufweist, in welche die Abutmentschraube (3) einführbar ist, wobei die Abutmentschraube eingerichtet ist, für eine Befestigung des Abutments am Verankerungsteil (1) in ein Innengewinde (17) einzugreifen, welches am Verankerungsteil in der Aussparung ausgebildet ist oder an einem Einsatzelement vorhanden ist, welches in die Aussparung (13) eingesetzt ist,
- wobei die Abutmentschraube (3) einen Schraubenkopf (31) aufweist,
- und wobei in der Öffnung eine nach koronal ausgebildete Schulter vorhanden ist, welche zusammen mit dem Schraubenkopf (31) beim Einführen der Schraube in die Öffnung einen Anschlag bildet,

## Beschreibung

Die Erfindung bezieht sich auf das Gebiet der Medizinaltechnik. Sie bezieht sich auf ein Dentalimplantatsystem.

Unter den Dentalimplantatsystemen sind zweiteilige Implantatsysteme verbreitet. Diese besitzen das eigentliche Implantat (Auch "Verankerungsteil" oder, wenn es mit einem Gewinde versehen ist, "Schraube" genannt) und ein zur Befestigung daran vorgesehenes Aufbauteil ("Abutment"). Das Verankerungsteil kann dabei so ausgestaltet sein, dass es ungefähr bündig mit der Knochenoberfläche eingebracht wird (als ein sogenanntes "bone-level"-Implantat), oder es kann mit einem Bereich koronal der Knochenoberfläche versehen sein, der oft gegenüber dem enossalen, i.a. mit einem Gewinde versehenen Bereich aufgeweitet ist, manchmal als "Tulpe" bezeichnet wird und der vorgesehen ist, bis ungefähr zur Zahnfleischoberfläche zu reichen. Implantate mit einem solchen transgingivalen Bereich werden "tissue level"-Implantate genannt. Der aus dem Zahnfleisch herausragende Bereich ("Pfosten"), welcher dem Befestigen einer Suprakonstruktion, also einer Krone, Brücke oder Prothese oder dergleichen, dient, wird in zweiteiligen Implantatsystemen durch das Abutment gebildet.

Als Implantatmaterialien sind nebst dem bewährten Titan keramische Materialien von zunehmender Bedeutung, darunter insbesondere Zirkonoxidkeramiken (auch, wissenschaftlich nicht ganz korrekt, als "Zirkon" bezeichnet). Keramikimplantate haben aufgrund ihrer Farbe ästhetische Vorteile; ausserdem begünstigen sie besonders gut die Integration von Knochen- und Gingivagewebe an der Implantatoberfläche und stossen oft auf eine bessere Akzeptanz bei Patienten als metallische Implantate. Sie haben aber den Nachteil, dass sie sprödhart sind und im Gegensatz zu den duktileren metallischen Implantaten bei grosser mechanischer Belastung zu Sprödbrüchen neigen, weshalb auch nicht sämtliche Implantatformen ohne Weiteres fertigbar sind.

Bei zweiteiligen Implantatsystemen gibt es verschiedene Möglichkeiten zur Befestigung des Abutments am Verankerungsteil. In titanbasierten Systemen wird oft eine Schraube, in diesem Text Abutmentschraube genannt, verwendet, welche durch eine von koronal her zugängliche Aussparung im Abutment hindurch geführt ist und in ein Gewinde im Verankerungsteil eingreift. Der Kopf der Abutmentschraube liegt an einer Schulter an, welche in der genannten Aussparung des Abutments ausgebildet ist und drückt dadurch das Abutment gegen das Verankerungsteil und dessen Befestigungsfosten in die dafür vorgesehene Aussparung des Verankerungsteils hinein.

Eine solche Abutmentschraube bewirkt konstruktionsgemäss lokal an gewissen Strukturen des Verankerungsteils und des Abutments sehr hohe Kräfte, weshalb sie zwar in titanbasierten Systemen sehr verbreitet ist, bei den sprödharten keramischen Implantatsystemen aber oft zu einem Versagen führen würde. Daher sind keramische Systeme meist geklebt, d.h. das Abutment wird durch einen Kleber am Verankerungsteil befestigt, was die bekannten Nachteile von Klebeverbindungen mit sich bringt.

Die US 2014/0272791 zeigt ein Dentalimplantatsystem mit einem Implantat aus Titan und einem Abutment, wobei keramische Materialien als Alternative erwähnt werden. Zwischen Implantat und Abutment besteht eine Klemmverbindung durch Verwendung eines Morsekonus. Zur Befestigung des Abutments am Implantat dient eine Schraube, deren Kopf an einer Stufe im Innern des Abutments ansteht.

Die Veröffentlichung JPH09 66065 zeigt ein dentales Implantatsystem mit metallischen Implantaten und Abutments, optional mit einer Beschichtung aus Hydroxylapatit oder Keramik. Zur Befestigung des Abutments am Implantat dient eine Schraube, deren Kopf auf der Unterseite konisch ist, wobei die konische Fläche mit einem Innengewinde des Abutments in Kontakt kommt, wenn die Schraube bis zum Anschlag eingeschraubt wird. In dieser Konfiguration steht eine Schulter des Abutments an einer koronal-stirnseitigen Endfläche des Implantats an.

Die Lösung von JPH09 66065 mit einer gegen das Innengewinde gedrückten konischen Fläche des Implantatkopfs führt aufgrund des Gewindeverlaufs dazu, dass die Schraube nur einseitig und nur entlang einer kurzen Linie am Abutment ansteht, was zu lokal sehr hohen Spannungsspitzen führt. Für keramische Abutment-Materialien eignet sich diese Lösung nicht oder wäre mindestens mit massiven Nachteilen und untolerierbar hoher Versagenswahrscheinlichkeit verbunden.

In der WO 2017/096494 wird ein zweiteiliges Bone-Level-Implantatsystem auf Keramikbasis beschrieben, bei welchem eine Abutmentschraube mit Hilfe eines Einsatzelements, das in der Aussparung des Verankerungsteils gelagert ist, gehalten wird.

Es ist eine Aufgabe der vorliegenden Erfindung, ein zweiteiliges Implantatsystem mit Verankerungsteil und Abutment zur Verfügung zu stellen, welches Nachteile des Standes der Technik überwindet und insbesondere so ausgestaltet ist, dass ein Versagen während der Befestigung des Abutments am Verankerungsteil und danach im implantierten Zustand weniger wahrscheinlich ist.

Diese Aufgabe wird gelöst durch die Erfindung wie sie in den Patentansprüchen definiert ist.

Gemäss einem Aspekt der Erfindung wird ein Dentalimplantatsystem zur Verfügung gestellt, welches aufweist:
- Ein Verankerungsteil zur Verankerung in Knochengewebe, wobei das Verankerungsteil aus einem keramischen Werkstoff gefertigt ist und eine Achse definiert,
- Wobei das Verankerungsteil eine zu einem koronalen Ende hin offene Aussparung für einen Eingriff eines Befestigungspfostens eines Abutments aufweist,
- Ein Abutment aus einem keramischen Werkstoff, mit einem Befestigungspfosten zum Eingreifen in die Aussparung,
- Und eine Abutmentschraube,
- wobei das Abutment eine in axialer Richtung durchgehende Öffnung aufweist, in welche die Abutmentschraube einführbar ist, wobei die Abutmentschraube eingerichtet ist, für eine Befestigung des Abutments am Verankerungsteil in ein Innengewinde einzugreifen, welches am Verankerungsteil in der Aussparung ausgebildet ist oder an einem Einsatzelement vorhanden ist, welches in die Aussparung eingesetzt ist,
- wobei die Abutmentschraube einen Schraubenkopf aufweist,
- und wobei in der Öffnung eine nach koronal ausgebildete Schulter vorhanden ist, welche zusammen mit dem Schraubenkopf beim Einführen der Schraube in die Öffnung einen Anschlag bildet.

Das System zeichnet sich insbesondere dadurch aus, dass der Schraubenkopf und die Schulter so zusammenwirken, dass ein Eindrehen der Schraube bis zum Anschlag eine Klemmverbindung zwischen Schulter und Schraubenkopf resultiert.

Diese Klemmverbindung kann sich bspw. dadurch ergeben, dass zwischen einer nach apikal weisenden Schraubenkopfschulter, welche die apikale Begrenzung des Schraubenkopfs bildet und einem Schraubenschaft apikal des Schraubenkopfs eine im Längsschnitt eine konkave Krümmung aufweisende Hohlkehle gebildet wird, welche beim Pressen der Schraube gegen den Anschlag gegen eine umlaufende Kante der Schulter gedrückt wird.

Eine solche Hohlkehle ist ein Beispiel eines Übergangsbereichs zwischen dem Schraubenschaft und einer apikalen Oberfläche des Schraubenkopfs, wobei in diesem Zwischenbereich die Normale auf die Oberfläche der Abutmentschraube sowohl in einem von 0° verschiedenen Winkel zur Normale auf den Schraubenschaft als auch in einem von 0° verschiedenen Winkel zur Normale auf die apikale Oberfläche des Schraubenkopfs steht. Die umlaufende Kante berührt die Abutmentschraube in diesem Übergangsbereich.

Unter "Schulter" versteht man im vorliegenden Kontext eine um die Achse der durchgehenden Öffnung umlaufend angeordneten Stufe.

Mit "Längsschnitt" ist ein Schnitt entlang einer durch die Achse geführten und zu dieser parallelen Ebene gemeint.

Insbesondere kann die Klemmverbindung durch ein Verkanten der Schraube mit dem Abutment bewirkt werden, eben bspw. indem die Kante der Schraube in die Hohlkehle (oder einen anderen Übergangsbereich) im Abutment gedrückt wird oder umgekehrt eine von der Schraube gebildete Schraubenkopfschulter in einen Abutment-Übergangsbereich zwischen einer im Wesentlichen vertikalen Partie der Wand durchgehenden Öffnung und der Schulter gedrückt wird. Auch ein solcher Abutment-Übergangsbereich kann als Hohlkehle ausgebildet sein, und auch in einem solchen Abutment-Übergangsbereich ist eine Normale auf die Oberfläche definiert, welche sowohl in einem (von 0° verschiedenen) Winkel zur Normale auf die vertikale Partie als auch in einem (von 0° verschiedenen) Winkel zur Normale auf die Schulter steht.

Das heisst, auch eine umgekehrte Anordnung mit einer umlaufenden Kante des Schraubenkopfs, welche in eine Hohlkehle des Abutments gedrückt wird, wäre denkbar.

Anstelle einer Hohlkehle kann die Abutmentschraube bzw. das Abutment am entsprechenden Ort des Anstehens der Kante auch eine konische Partie aufweisen (d.h. der Übergangbereich bzw. Abutment-Übergangsbereich ist konisch). Bevorzugt weist die Normale auf die Oberfläche der Abutmentschraube bzw. des Abutments am Ort der Berührung durch die Kante des Abutments bzw. der Abutmentschraube einen relativ grossen Winkel zur Achse auf, ist also nicht parallel und auch nicht annähernd parallel zu dieser, damit sich die genannte Klemmverbindung ergibt. Der Winkel kann bspw. mindestens 30° oder mindestens 45° betragen.

Insgesamt kann also die Klemmverbindung durch ein Anstehen einer umlaufenden Kante des Abutments oder des Schraubenkopfs an einem hohlkehlenartigen oder konischen Übergangsbereich des Schraubenkopfs beziehungsweise Abutments bewirkt sein.

Diese Klemmung bewirkt, dass die Abutmentschraube beim Erreichen des Anschlags am apikalen Ende des Schraubenkopfs geklemmt wird und so eine weitere Drehbewegung, welche ein weiteres Eindrehen nach apikal bewirken würde, durch das Klemmen (insbesondere verkanten) verhindert wird. Dadurch wird im Unterschied zu Lösungen gemäss dem Stand der Technik, bei welcher zum Bilden des Anschlags bloss die vom Schraubenkopf gebildete apikale Kontaktfläche flächig gegen eine Schulter des Abutments gedrückt wird, ein Problem gelöst. Durch das erfindungsgemässe Vorgehen kann nämlich vermieden werden, dass beim Einschrauben der Abutmentschraube nach dem Erreichen des Anschlags das Schraubengewinde weiter eindrehen kann und so erhebliche Spannungen, auch in axialer Richtung, entstehen können, welche letztlich ein Materialversagen, bspw. im Bereich des Schraubenschafts oder im Bereich des Übergangs zwischen Schraubenschaft und Schraubenkopf, verursachen können.

Dieses Vorgehen ist daher insbesondere auch für vollkeramische Systeme geeignet, bei welchem auch die Abutmentschraube aus einem keramischen Werkstoff gefertigt ist.

Das Verankerungsteil kann insbesondere ein Aussengewinde aufweisen, mittels welchem es implantiert wird. In diesem Fall entspricht die Achse des Verankerungsteils der Gewindeachse.

An der Aussparung des Verankerungsteils kann nebst einem Innengewindebereich - in dem das Innengewinde vorhanden ist oder ein das Innengewinde aufweisendes Einsatzelement einsetzbar ist - auch einen bspw. konischen Abstützbereich aufweisen, in welchen eine bspw. ebenfalls konische Abstützpartie des Abutments eingreift. Ein solcher bspw. konischer Abstützbereich hat im Vergleich zu einem Anstehen des Abutments an einer horizontalen (d.h. zur Achse senkrechten) Anstossfläche des Verankerungsanteils erstens den Vorteil, dass er besser dichtend wirkt. Zweitens wirkt er besonders vorteilhaft mit der Klemmverbindung der hier beschriebenen Art zusammen indem die Kraft beim Anstehen der Schraube am Anschlag kontinuierlich erhöht wird.

Ergänzend oder alternativ kann die Aussparung auch einen Innenstruktur-Bereich mit einer eine Eindrehgeometrie zum Zusammenwirken mit einem Eindrehwerkzeug und/oder einer Verdrehsicherungsstruktur des Abutments aufweisen. Insbesondere kann die Aussparung von koronal nach apikal zuerst den Abstützbereich, dann den Innenstrukturbereich und dann einen Innengewindebereich ausbilden.

Das System kann nebst dem Implantat und dem Abutment auch ein Eindrehwerkzeug aufweisen.

Das keramische Material des Verankerungsteils (und gegebenenfalls des Abutments) kann eine Oxidkeramik, bspw. eine Zirkonoxid-basierte Keramik sein, insbesondere eine Yttrium-stabilisierte Zirkonoxid-basierte Keramik. Auch Aluminiumoxidbasierte Keramiken sind verwendbar.

Das Verankerungsteil kann insbesondere als bone-level-Verankerungsteil (subgingivales Implantat) ausgebildet sein, d.h. es gehört als Ganzes zum enossalen Teil des Implantatsystems und ist so geformt, dass es zum Versenken bis auf Knochenkammhöhe vorgesehen ist, was beispielsweise das Vorhandensein eines sich gegenüber dem Gewinde substantiell aufweitenden koronalen (transgingivalen) Bereichs ausschliesst. Es kann aber anders ausgestaltet sein, beispielsweise auch als tissue-level-Verankerungsteil.

Die Anordnung der Eindrehgeometrie apikal des Abstützbereichs ermöglicht eine Kraftübertragung in einen schon während des Eindrehens enossal angeordneten Bereich. Nebst den obigen Vorteilen bewirkt das den weiteren Vorteil, dass dadurch einer Verwindung des Implantats vorgebeugt werden kann.

Die gegebenenfalls vorhandene Eindrehgeometrie (d.h. der axiale Bereich (Eindrehgeometriebereich) der Aussparung, in welchem die Eindrehgeometrie angeordnet ist) kann ihrem axialen Verlauf insbesondere zylindrisch, d.h. entlang der Achse translationssymmetrisch, sein oder bspw. auch konisch oder konkav oder eventuell konvex. Im Querschnitt senkrecht zur Achse ist die Eindrehgeometrie definitionsgemäss nicht rotationssymmetrisch. Insbesondere kann im Bereich der Eindrehgeometrie die Innenstruktur eine n-zählige Drehachse aufweisen, wobei n eine natürliche Zahl grösser 1 ist. Beispiele für Eindrehgeometrie-Querschnittsformen sind ein Oval, Vieleckformen (Dreieck, Viereck, Fünfeck, Sechseck, etc.), eventuell mit abgerundeten Ecken, ein Gleichdick, eine Stern- oder Blumenform, etc.

Die Aussenstruktur der Eingriffpartie des gegebenenfalls vorhandenen Eindrehwerkzeugs entspricht beispielsweise im Wesentlichen der Eindrehgeometrie, so dass ein passgenaues Einführen möglich ist; die Eindrehgeometrie und die Eingriffpartie können einander also in ihrer Querschnittform entsprechen. Es ist jedoch nicht ausgeschlossen, dass die Aussenstruktur des Eindrehwerkzeugs der Eindrehgeometrie nur bereichsweise folgt; beispielsweise muss sich die Eingriffpartie nicht notwendigerweise bis in äusserste Kanten erstrecken und/oder kann ein regelmässiges Aussen-Sechseck in ein gleichseitiges Dreieck eingepasst werden. Bevorzugt ist oft jedoch, dass eine möglichst grosse Kraftübertragungsfläche vorhanden ist.

Der Abstützbereich kann im Gegensatz zur Eindrehgeometrie rotationssymmetrisch sein. Insbesondere kann der Abstützbereich wie bereits erwähnt konisch, aber auch becherartig-konkav oder eventuell konvex sein; auch ein mindestens bereichsweise zylindrischer Verlauf ist möglich.

Der Abstützbereich kann das Abutment passgenau umschliessen, wodurch auch eine Abdichtung der Aussparung ermöglicht wird. Das Implantat kann im Abstützbereich insbesondere einen Innenkonus aufweisen, wobei das Abutment in einem apikalen Bereich eine einen entsprechenden Aussenkonus bildende Abstützpartie aufweisen kann. Der Innenkonus und der Aussenkonus bilden je mindestens eine paarweise aufeinander angepasste konische Klemmfläche aus, wodurch das Implantat und das Abutment durch eine Klemmverbindung miteinander verbindbar sind. Zwischen Innen- und Aussenkonus bildet sich eine lagestabile, Relativbewegungen zwischen Implantat und Verankerungsteil entgegenwirkende, dichte Verbindung zwischen Verankerungsteil und Abutment. Im Idealfall bildet diese einen Bakterien-, Keime- und Partikelstopp.

Das Abutment weist in Ausführungsformen eine im zusammengesetzten Zustand in die Eindrehgeometrie eingreifende Verdrehsicherungsstruktur auf. Diese kann ebenfalls passgenau in die Eindrehgeometrie eingreifen. In alternativen Ausführungsformen kann vorgesehen sein, dass die Verdrehsicherungsstruktur eine x·n-zählige Drehsymmetrie um die Achse aufweist, wobei x eine natürliche Zahl grösser eins ist. In diesen Ausführungsformen ist eine Drehposition des Abutments in Bezug auf das Implantat durch eine Aufnahme der Verdrehsicherungsstruktur des Abutments in die Eindrehgeometrie des Implantats in n mal x diskreten Drehpositionen fixierbar. Das kann von Vorteil sein, wenn aus Gründen einer möglichst günstigen Krafteinleitung beim Eindrehen die Eindrehgeometrie eine niedrige Drehsymmetrie aufweist (bspw. eine bloss dreizählige); durch diesen Ansatz sind trotzdem viele mögliche Relativ-Drehpositionen möglich, was immer dann von Bedeutung sein kann, wenn das Abutment abgewinkelt ist oder eine sonst von der Drehsymmetrie um die Achse abweichende Struktur (abgesehen von der Drehsicherungsstruktur) hat.

Für einen Einwachsprozess kann das Implantatsystem weiterhin eine Kappe aufweisen, über welcher nach dem Implantieren des Verankerungsteils die Gingiva vernäht wird, bis das Implantat (Verankerungsteil) eingeheilt ist, und/oder mindestens einen Gingivaformer, welcher temporär anstelle des Abutments am Verankerungsteil befestigt wird und ein Anwachsen der Gingiva in der später anzustrebenden Form ermöglicht. Kappe und/oder Gingivaformer können keramisch oder auch aus einem geeigneten Kunststoff gefertigt sein, auch metallische Ausführungen kommen für diese temporären Elemente in Frage.

In diesem Text werden die Begriffe "koronal" und "apikal" in Bezug auf die Elemente des Implantatsystems so verwendet, wie sie für den implantierten Zustand, in welchem das Verankerungsteil in den Kieferknochen eingeschraubt ist und das Abutment (und ggf. die Suprakonstruktion) am Verankerungsteil befestigt ist, gelten, analog zum natürlichen Zahn, d.h. "apikal" ist die Richtung zur Wurzelspitze hin, ins Innere des Kieferknochens, "koronal" die entgegengesetzte Richtung zur Zahnkrone hin.

Im Folgenden wird der Erfindungsgegenstand anhand von bevorzugten Ausführungsbeispielen, welche in den beiliegenden Zeichnungen dargestellt sind, näher erläutert. Es zeigen in teilweise von Figur zu Figur verschiedenen Massstäben:
- Fig. 1: ein Implantatsystem mit Verankerungsteil, Abutment, Abutmentschraube und Schraubwerkzeug in einer Ansicht,
- Fig. 2: eine Schnittdarstellung (parallel zur Achse geschnitten) des Systems gemäss Figur 1
- Fig. 3: eine Darstellung entsprechend Fig. 2 des Systems während des Zusammensetzens;
- Fig. 4: Eine Variante des Implantatsystems, ohne Schraubwerkzeug;
- Fig. 5: eine Schnittdarstellung entsprechend Fig. 4;
- Fig. 6: eine Ansicht des zusammengesetzten Implantatsystems aus Figuren 4 und 5;
- Fig. 7: eine Schnittdarstellung entsprechend Fig. 6; und
- Fig. 8: ein Detail aus Fig. 7.

In den Figuren bezeichnen gleiche Bezugszeichen gleiche oder analoge Teile.

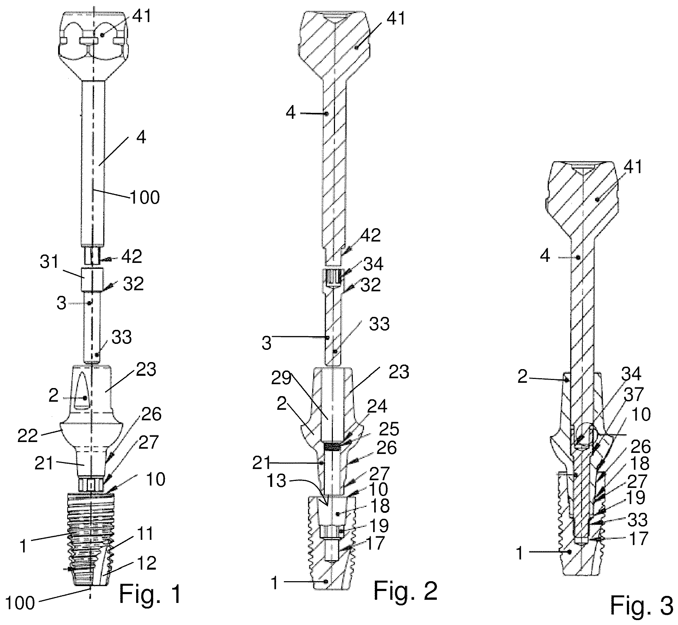

Das Dentalimplantat (Verankerungsteil 1), welches unter anderem in **Figuren 1-3** dargestellt ist, weist ein sich fast über die ganze Länge, fast bis zum koronalen Ende erstreckendes Aussengewinde 11 auf, das eine Achse 100 definiert. Das Verankerungsteil 1 hat eine sich nach apikal leicht verjüngende Form, so, dass es im Querschnitt entlang einer Ebene parallel zur Achse 100 als Ganzes bis auf die Gewindevertiefungen und apikale Spannuten 12 leicht konvex gekrümmt ist und als Ganzes stetig von einer koronal ungefähr zylindrischen in eine apikal sich verjüngenden Form übergeht. Das Aussengewinde 11 hat eine nicht-konstante Gewindetiefe und ist beispielsweise selbstschneidend ausgebildet.

Zum koronalen Ende hin offen ist eine Aussparung 13, in welche im fertig implantierten Zustand des Implantatsystems ein Befestigungspfosten 21 eines Abutments 2 hineinragt. Die Ausnehmung bildet einen koronalen Abstützbereich 18, apikal davon einen Eindrehgeometriebereich 19 und apikal von diesem einen Innengewindebereich 17 aus. Der Abstützbereich 18 weist einen insgesamt konischen Verlauf mit einem sich nach koronal leicht aufweitenden Durchmesser auf. Im Eindrehgeometriebereich 19 bildet die Ausnehmung eine Eindrehgeometrie, indem sie nicht rotationssymmetrisch um die Achse 100 verläuft. Im dargestellten Ausführungsbeispiel eine im Querschnitt entlang einer Ebene senkrecht zur Achse als gleichseitiges Sechseck mit abgerundeten Ecken ausgebildet, wobei sie zylindrisch in dem Sinn ist, dass sie entlang der Achse einen konstanten Querschnitt aufweist. Der Innengewindebereich ist mit einem Innengewinde versehen, welches auf ein Schraubengewinde der Abutmentschraube abgestimmt ist.

Im dargestellten Ausführungsbeispiel ist das Verankerungsteil ein bone-level-Implantat, bei welchem die Implantatschulter 10 mit zirkulärer Kante, welche die Innenverbindung zwischen Verankerungsteil 1 und Abutment 2 abschliesst, auf Knochenniveau ist. Die Erfindung lässt sich aber auch auf andere zweiteilige Implantatsysteme anwenden, namentlich auch auf "tissue level"-Implantate, bei welchen am Verankerungsteil koronal des enossalen Teils mit Gewinde ein bspw. tulpenartig aufgeweiteter transgingivaler Bereich ausgebildet ist.

Das Abutment 2 weist nebst dem Befestigungspfosten 21 einen koronalen Pfosten 23 zur Befestigung einer Suprakonstruktion auf. Apikal davon ist ein beispielsweise an den erwarteten Verlauf der Gingiva angepasster transgingivaler Bereich 22 ausgebildet. Die Formen sowohl eines solchen transgingivalen Bereichs 22 als auch des Pfostens 23 - hier mit einer optionalen Abflachung gezeichnet - inklusive dessen Winkel zum Befestigungspfosten und also zur Achse 100 sind angepasst an spezifische Bedürfnisse und hängen davon ab, wo im Kiefer das Implantat gesetzt wird oder gesetzt worden ist. Insbesondere kann ein Implantations-Set mit mindestens einem Verankerungsteil mehrere verschiedene Abutments für verschiedene Implantatsionssituationen umfassen.

Am Befestigungspfosten 21 sind eine Abstützpartie 26, welche in ihrer Form auf den Abstützbereich 18 abgestimmt ist, und apikal davon eine Verdrehsicherungsstruktur 27 ausgebildet. Die Verdrehsicherungsstruktur weist eine Sechskantform, ebenfalls mit abgerundeten Kanten, auf.

Das Abutment weist eine axial durchgehende Öffnung 29 für die Abutmentschraube auf. Ausserdem diese bildet eine Schulter 24 für den Kopf der Abutmentschraube. An der Öffnung ist ausserdem im dargestellten Ausführungsbeispiel ein optionales Abutment-Innengewinde 25 für ein sogenanntes "Retrieval Tool" (ein Werkzeug zum entfernen des Abutments) vorhanden.

Die Abutmentschraube 3 besitzt einen Schaftbereich mit dem auf das Innengewinde des Verankerungsteils abgestimmten Aussengewinde 33 sowie einen Schraubenkopf 31, der nach apikal hin einen Schraubenanschlag 32 bildet. Im Schraubenkopf ist eine nach koronal offene Ausnehmung mit einer Eingriffsstruktur 34, hier in Form eines Innensechskants, für einen Schraubenzieher 4 ausgebildet. Der Schraubenzieher 4 besitzt entsprechend eine Eingriffpartie, im dargestellten Beispiel mit Sechskantstruktur. In Ausführungsformen sind Eingriffsstruktur und Eingriffpartie leicht nach apikal zulaufend, d.h. leicht konisch ausgeformt, so dass sich der Schraubenzieher bei leichtem Eindrücken leicht mit der Abutmentschraube verkeilt und deshalb diese am Schraubenzieher hält. Koronal besitzt der Schraubenzieher einen Adapterkopf 41, bspw. für eine Ratsche mit einstellbarem Drehmoment.

Fig. 3 zeigt das Implantatsystem während des Vorgangs der Abutment-Befestigung, vor dem Applizieren einer Suprakonstruktion (Tertiärstruktur) ist. Das Gewinde 33 der Abutmentschraube 3 wird apikal vom entsprechenden Innengewinde des Verankerungsteils 1 aufgenommen. Die Abutmentschraube 3 fixiert das Abutment 2 relativ zum Verankerungsteil gegenüber einem Auseinanderziehen in axialer Richtung. Dabei ist das Abutment im Abstützbereich abgestützt und geführt, indem die Abstützpartie 26 dort flächig an der Innenfläche der Ausnehmung anliegt. Gegenüber Verdrehungen ist das Abutment in dieser Position gesichert, indem die Verdrehsicherungsstruktur 27 in den koronalen Bereich der Eindrehgeometrie eingreift.

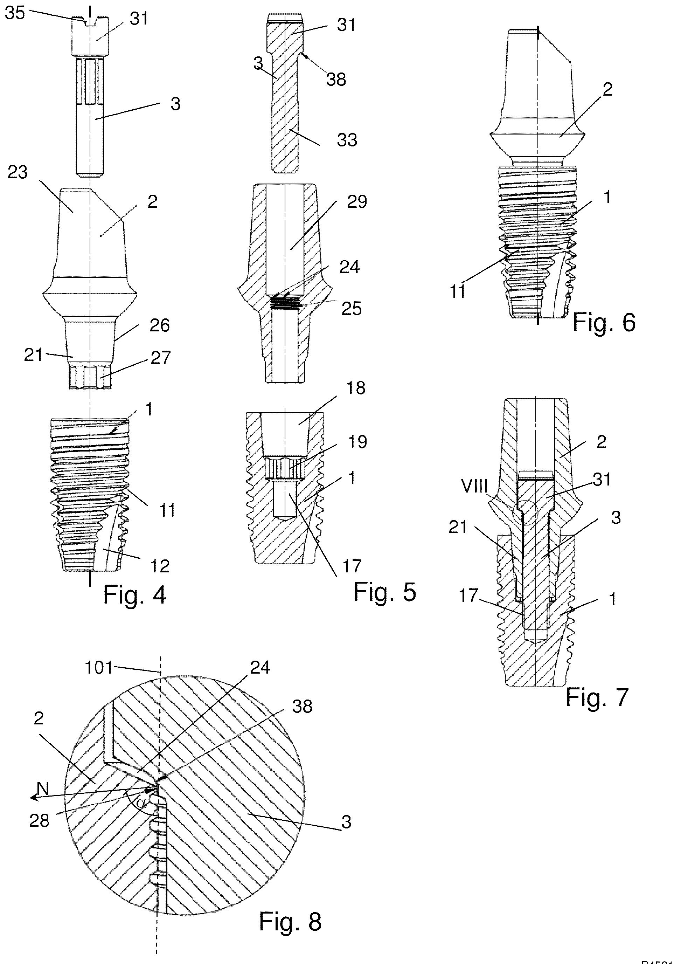

**Figuren 4-7** zeigen das Dentalimplantatsystem ohne den Schraubenzieher 4 und mit einer leicht modifizierten Abutmentschraube, die sich von der Abutmentschraube der Ausführungsform von Figuren 1-3 unter anderem dadurch unterscheidet, dass die Eingriffsstruktur durch einen Schraubenschlitz 35 gebildet wird.

Ausserdem ist in Fig. 4 das Abutment mit einer Abschrägung im Bereich des koronalen Pfostens 23 gezeichnet. Generell kann wie auch vom Stand der Technik her bekannt insbesondere der koronale Pfosten des Abutments je nach Bedürfnis und Implantationssituation gewählt sein, wobei auch zur Achse abgewinkelte koronale Pfosten vorkommen können. Die durchgehende Öffnung wird aber - wie an sich bekannt - immer axial verlaufen, auch bei einem abgewinkelten koronalen Pfosten.

Das Wirkprinzip des erfindungsgemässen Klemmmechanismus sieht man in Figur 8 besonders gut, welche ein Detail VIII aus Figur 7 vergrössert darstellt.

Die Schulter 24, die am Abutment in der durchgehenden axialen Öffnung 29 ausgebildet ist, endet innenseitig in einer Kante 28. Gegen diese wird im zusammengesetzten Zustand eine Hohlkehle 38 der Abutmentschraube 3 gedrückt. Dadurch verkantet die Schraube relativ zum Abutment und lässt sich nicht weiter nach apikal eindrehen. Die axiale Position der Hohlkehle 38 ist so gewählt, dass diese einen Anschlag für die Schraube bildet. Aufgrund dieses Vorgehens ist sichergestellt, dass ein Eindrehen der Schraube über den Anschlag hinaus durch dieses Verkanten und die dadurch erzeugte Klemmwirkung verhindert wird. Im Vergleich zum Stand der Technik mit einem konventionellen Anschlagen einer nach apikal weisenden Kontaktfläche des Schraubenkopfs an einer Schulter des Abutments hat das den Vorteil, dass es beim Anziehen der Schraube gegen den Anschlag keine markanten Spannungen in axialer Richtung in der Schraube erzeugt werden,

In Fig. 8 ist die Kante 28 idealisiert als scharfe Kante gezeichnet. In der Praxis kann die Kante 28 auch leicht gerundet sein. Wichtig für das Verkanten kann jedoch sein, dass ein Radius einer eventuellen solchen Abrundung (im Längsschnitt) kleiner ist als der Radius (im Längsschnitt) der Hohlkehle 38.

Ausserdem gilt bevorzugt, dass eine umlaufende Linie, entlang welcher ein Anstehen der Hohlkehle an der Kante stattfindet, noch innerhalb der Hohlkehle, d.h. innerhalb desjenigen Bereiches erfolgt, an einem Ort ist die Schraube im Längsschnitt konkav gerundet ist. Dadurch ergibt sich auch der Vorteil, dass diese Linie an der Schraube selbst nicht genau definiert sein muss, d.h. das Vorgehen ist auch vorteilhaft in Bezug auf Fertigungstoleranzen.

Eine Normale N auf die Oberfläche der Abutmentschraube am Ort des Kontakts mit der Abutment weist im Allgemeinen einen vergleichsweise grossen Winkel α zur Achse auf, von bspw. mindestens 30° oder mindestens 45° oder gar mindestens 55°. Insbesondere ist die Normale weder parallel noch annähernd parallel zur Achse. In Fig. 8 ist eine Hilfslinie 101 parallel zur Achse eingezeichnet um den Winkel α zu illustrieren. Diese mögliche Bedingung für den Winkel der Normale gilt auch dann, wenn anstelle einer Hohlkehle eine konische Partie vorhanden ist.

In den beschriebenen Ausführungsformen greift die Abutmentschraube in das Innengewinde 17 ein, welches direkt im Verankerungsteil vorhanden ist. Das Prinzip der vorliegenden Erfindung wäre aber auch übertragbar auf ein System, bei welchem das Gewinde durch ein separates, in die Aussparung eingesetztes Einsatzelement gebildet wird, wie es in EP 2 878 280 oder in WO 2017/096494 gelehrt wird.

## Patentansprüche

1. Dentalimplantatsystem, aufweisend:
- Ein Verankerungsteil (1) zur Verankerung in Knochengewebe, wobei das Verankerungsteil aus einem keramischen Werkstoff gefertigt ist und eine Achse (100) definiert,
- ein Abutment (2) aus einem keramischen Werkstoff,
- Wobei das Verankerungsteil eine zu einem koronalen Ende hin offene Aussparung (13) für einen Eingriff eines Befestigungspfostens (21) des Abutments (2) aufweist,
- Und eine Abutmentschraube (3),
- wobei das Abutment (2) eine in axialer Richtung durchgehende Öffnung (29) aufweist, in welche die Abutmentschraube (3) einführbar ist, wobei die Abutmentschraube eingerichtet ist, für eine Befestigung des Abutments am Verankerungsteil (1) in ein Innengewinde (17) einzugreifen, welches am Verankerungsteil in der Aussparung (13) ausgebildet ist oder an einem Einsatzelement vorhanden ist, welches in die Aussparung (13) eingesetzt ist,
- wobei die Abutmentschraube (3) einen Schraubenkopf (31) aufweist,
- und wobei in der Öffnung eine nach koronal ausgebildete Schulter (24) vorhanden ist, welche zusammen mit dem Schraubenkopf beim Einführen der Schraube in die Öffnung einen Anschlag bildet,
**dadurch gekennzeichnet, dass** der Schraubenkopf (31) und die Schulter so zusammenwirken, dass ein Eindrehen der Schraube bis zum Anschlag eine Klemmverbindung zwischen Schulter (24) und Schraubenkopf (31) resultiert.

2. System nach Anspruch 1, wobei die Klemmverbindung durch ein Anstehen einer umlaufenden Kante (28) des Abutments oder des Schraubenkopfs an einem hohlkehlenartigen oder konischen Übergangsbereich des Schraubenkopfs beziehungsweise Abutments bewirkt ist.

3. System nach Anspruch 1 oder 2, wobei zwischen dem Schraubenkopf (31) und einem apikal davon angeordneten Schraubenschaft (33) eine im Längsschnitt eine konkave Krümmung aufweisende Hohlkehle (38) gebildet wird, welche beim Pressen der Schraube gegen den Anschlag gegen eine umlaufende Kante (28) der Schulter gedrückt wird.

4. System nach einem der vorangehenden Ansprüche, wobei die Klemmverbindung durch ein Verkanten des Schraubenkopfs (31) mit dem Abutment (2) bewirkt wird.

5. System nach Anspruch 4, wobei das Abutment eine umlaufende Kante (28) bildet und eine Normale auf die Oberfläche der Abutmentschraube am Ort des Kontakts zur Kante einen Winkel von mindestens 30° zur Achse aufweist.

6. System nach einem der vorangehenden Ansprüche, wobei die Abutmentschraube aus einem keramischen Werkstoff gefertigt ist.

7. System nach einem der vorangehenden Ansprüche, wobei das Verankerungsteil (1) ein Aussengewinde (11) aufweist, dessen Gewindeachse der Achse (100) entspricht.

8. System nach einem der vorangehenden Ansprüche, wobei die Aussparung (13) einen konischen Abstützbereich (18) bildet, in welchen eine konische Abstützpartie (26) des Abutments (2) eingreift.

9. System nach einem der vorangehenden Ansprüche, wobei die Aussparung (13) einen Innenstruktur-Bereich (19) mit einer eine Eindrehgeometrie zum Zusammenwirken mit einer entsprechenden Verdrehsicherungsstruktur (27) des Abutments (2) bildenden Innenstruktur aufweist.

10. System nach Anspruch 8 und 9, wobei die Aussparung (13) von koronal nach apikal zuerst den Abstützbereich, dann den Innenstrukturbereich und dann einen Innengewindebereich ausbildet.

11. System nach einem der Ansprüche 9 oder 10, ausserdem aufweisend ein Eindrehwerkzeug mit einer Eingriffpartie, welches eine zum Eingriff in die Innenstruktur angepasste Aussenstruktur aufweist.

12. System nach einem der vorangehenden Ansprüche, wobei das Verankerungsteil (1) als bone-level-Verankerungsteil ausgebildet ist.
